# DEMANDE DE BREVET EUROPEEN

(11) **EP 0 766 111 A1**
(43) Date de publication de la demande: **02.04.1997**
(21) Numéro de dépôt: 96401800.6
(22) Date de dépôt: 20.08.1996
(51) Int. Cl.: G02B 6/38

(54) **Connecteur optique et son procédé de réalisation**

(30) Priorité: 29.09.1995 FR 9511515
(71) Demandeur: FRAMATOME CONNECTORS INTERNATIONAL, 92400 Courbevoie, Paris (FR)
(72) Inventeur: Quillet, Thierry, 72650 La Milesse (FR); Le Guen, Pierre-Yves, 72000 Le Mans (FR); Ribeau, Pascal, 72100 Le Mans (FR)
(74) Mandataire: Lepercque, Jean

(57) **Abrégé**

L'invention concerne un connecteur optique (Cₒ) et son procédé de réalisation. Le connecteur optique (Cₒ) comprend deux demi-coquilles (1) destinées à recevoir des fiches optiques terminant chacune une fibre optique (fₒ). Les terminaisons (T) sont entourées d'un manchon et d'un premier ressort. On dispose ensuite un corps de base (4) compris entre le ressort et une butée et, de l'autre coté de la terminaison (T), un élément de couplage optique (5). Un second ressort (6) est disposé entre les deux. Cet ensemble (Elᵢ) est ensuite disposé dans une des demi-coquilles (12) qui comprend une nervure double (15, 16), support du corps de base (4) et des logements (14) pour les éléments de couplage optiques (5), laissant une possibilité de translation selon l'axe (Δ) des fibres (fₒ). Un capot de protection (7) bloque provisoirement les terminaisons (T) lors du montage. La dernière étape consiste en l'assemblage des deux demi-coquilles (1).

## Description

L'invention concerne un connecteur optique.

Elle concerne plus particulièrement un connecteur optique multiple destiné à effectuer le couplage entre un ensemble de fiches optiques, terminaisons de fibres optiques, contenues dans un boîtier, et une embase de type complémentaire, support d'autant de composants optoélectroniques actifs (diodes électroluminescentes ou diodes lasers, par exemple) et/ou optiques passifs (fibres optiques, par exemple).

L'invention concerne également un procédé de réalisation d'un tel connecteur.

Il est tout d'abord utile de rappeler que les fibres optiques sont des éléments optiques filiformes de très faible diamètre, notamment en ce qui concerne la partie active, c'est-à-dire le coeur destiné à guider l'énergie lumineuse, vecteur du signal à transmettre. Notamment, les fibres optiques de type monomode ont un diamètre inférieur à 100 µm.

Un rendement énergétique acceptable nécessite donc un couplage de grande précision entre la fibre optique et l'élément optique à coupler, élément optique qui peut d'ailleurs être constitué par une seconde fibre optique. Cette précision de couplage s'exprime notamment en termes d'alignement axial et en rotation, entre les deux éléments à coupler.

Un autre paramètre doit être pris en compte : dans l'industrie de la connectique, à l'exception de certaines applications spécifiques qui peuvent s'accommoder de matériels onéreux, il est clair que pour des productions standards, en quantité élevée, un prix de revient aussi bas que possible est recherché. Le prix de revient d'un connecteur inclue notamment le coût des matières premières et des composants utilisés, mais aussi les coûts de fabrication et de montage.

Il est clair qu'une réalisation complexe augmente les coûts précités. En sens inverse, outre la diminution de coût escompté, une réalisation plus simple permet également un montage et éventuellement un démontage aisé, voire offre la possibilité de réaliser ces opérations in situ, ce qui facilite grandement la maintenance.

On comprend aisément que ces différentes exigences semblent, a priori, antinomiques.

En outre, bien que munies habituellement d'une gaine, il n'en reste pas moins vrai que les fibres optiques restent des composants très fragiles. Il est donc nécessaire de les maintenir fermement à la sortie du boîtier, mais sans exercer de contraintes trop élevées, ce d'autant plus que, sous certaines conditions, de telles contraintes peuvent aboutir à des effets parasites (rotation de polarisation, fuite de signal lumineux, etc.).

Dans l'Art Connu, à titre d'exemple, la demande de brevet européen EP-A-0 633 486 divulgue un ensemble de connexion électro-optique comprenant un premier élément de connexion comportant un premier corps central dans lequel sont disposés une pluralité de premiers éléments optiques, constitués chacun d'une embase active comportant au moins un composant électro-optique et un deuxième élément de connexion comportant un premier corps central dans lequel sont disposés une pluralité de deuxièmes éléments optiques qui sont des fiches de connexion de fibres optiques. Cependant d'après la structure adoptée, ce dispositif n'est pas à même de satisfaire à toutes les exigences ci-dessus énoncées.

L'invention se fixe pour but la réalisation d'un connecteur optique du type précité, visant à satisfaire simultanément les exigences précitées.

Pour ce faire, le connecteur selon l'invention comprend un boîtier constitué de deux demi-coquilles. Le montage des fiches optiques, terminaisons des fibres optiques, s'effectue par l'intermédiaire d'un corps de base et d'un élément de couplage, séparés par un élément élastique. Cet ensemble est ensuite positionné dans l'une des demi-coquilles de la manière qui sera détaillée ci-après, à l'aide d'un capot de protection comportant des plots de centrage. Le boîtier peut alors être refermé à l'aide de la seconde demi-coquille.

L'assemblage ainsi constitué consiste en un ensemble de connexion de points optiques pour lequel chaque point optique possède une grande liberté de translation avec rappel par ressort, aussi bien au niveau de l'élément de couplage précité, celui-ci étant guidé dans des logements réalisés dans la première demi-coquille, qu'au niveau de la fiche, coulissant par rapport au boîtier dans les corps de base précités.

Dans une variante préférée de l'invention, le capot de protection, une fois retiré, pour effectuer un couplage effectif avec un connecteur de type complémentaire, sert également de guide pour maintenir le faisceau de fibres optiques entrant dans le boîtier du connecteur.

L'invention a donc pour objet un connecteur optique comprenant un boîtier constitué de deux demi-coquilles destinées à recevoir au moins une fiche optique, terminaison d'une fibre optique et présentant un axe de symétrie, le connecteur étant destiné à être accouplé optiquement à un connecteur optique complémentaire, caractérisé en ce que ladite terminaison de fibre optique est entourée d'un manchon comprenant, en une première extrémité, une butée et des premiers moyens élastiques, solidaires du manchon en une seconde extrémité proche de l'extrémité libre de la terminaison, en ce qu'un premier moyen, dit corps de base, est enfilé sur ce manchon et disposé entre la butée et les premiers moyens élastiques, ces premiers moyens élastiques maintenant la fiche optique en butée avancée sur le corps de base, de manière à autoriser un mouvement de translation de la terminaison le long de l'axe de symétrie, en ce qu'un second moyen, dit élément de couplage optique, est enfilé sur ladite terminaison de fibre optique par ladite extrémité libre, cet élément de couplage optique étant agencé de telle sorte qu'il possède un mouvement de translation le long de l'axe de symétrie, en ce que des seconds moyens élastiques sont disposés entre le corps de base et l'élément de couplage optique, de manière à exercer une force de répulsion sur l'élément de couplage optique suivant une direction parallèle à l'axe de symétrie, et en ce que l'intérieur de chacune desdites demi-coquilles comprend des moyens de verrouillage pour chacun desdits corps de base dans une position déterminée et une ouverture formant logement pour chacun desdits éléments de couplage optique.

L'invention a encore pour objet un procédé de réalisation d'un tel connecteur.

L'invention sera mieux comprise et d'autres caractéristiques et avantages apparaîtront à la lecture de la description qui suit en référence aux figures annexées, et parmi lesquelles :
- La figure 1 illustre un exemple de réalisation d'une première demi-coquille constituant le boîtier d'un connecteur selon l'invention ;
- Les figures 2a à 2c illustrent les phases du montage d'un élément de connexion optique comprenant une fiche optique, un corps de base et d'un élément de couplage ;
- Les figures 3a et 3b illustrent le montage de cet élément de connexion optique dans ladite première demi-coquille ;
- Les figures 4a et 4b illustrent cette première demi-coquille munie d'un capot de protection, en vue de trois quarts arrière et de trois quarts avant, respectivement ;
- La figure 5 illustre la demi-coquille précitée dans laquelle est montée une pluralité d'élément de connexion ;
- La figure 6 illustre le connecteur complet, c'est-à-dire dans l'état pour lequel la seconde demi-coquille est positionnée sur la première demi-coquille de manière à former un boîtier fermé ;
- Les figures 9a et 9b illustrent, respectivement, le montage d'un connecteur selon l'invention sur un panneau support en vue d'un couplage avec un connecteur de type complémentaire, avant et après couplage effectif, respectivement ;
- Les figures 10a et 10b illustrent un exemple de réalisation de capot de protection, en vue avant et arrière, respectivement.

On va maintenant décrire de façon détaillée un exemple de réalisation d'un connecteur optique selon l'invention.

Comme il a été indiqué, le connecteur comprend un boîtier constitué de deux demi-coquilles. Ces deux demi-coquilles sont destinées à recevoir au moins une fiche optique de connexion et de préférence un ensemble de fiches de fiches optiques de connexion. Cet aspect, en soi, est commun à de nombreux dispositifs de l'art connu.

Pour être conforme à l'enseignement de l'invention, chaque demi-coquilles comprend des dispositions supplémentaires particulières.

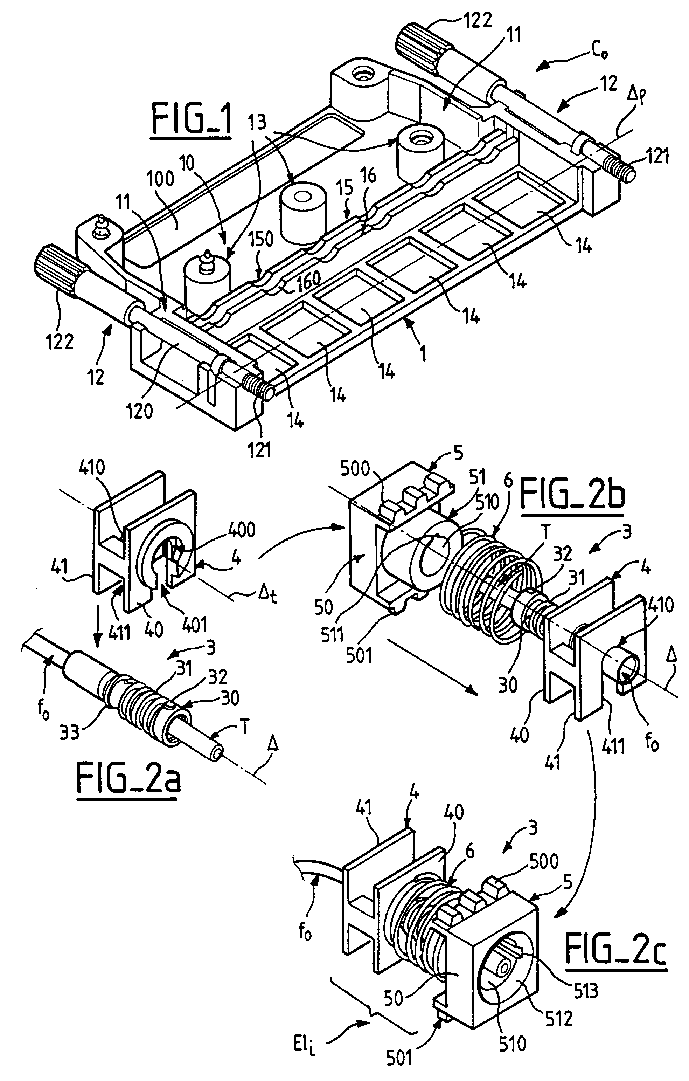

Un exemple de réalisation d'une telle demi-coquille 1 est illustrée par la figure 1. Par convention, on appellera la demi-coquille représentée sur cette figure, "première demi-coquille" ou "demi-coquille inférieure". Le boîtier, constituant le connecteur Cₒ complet, comprend naturellement deux demi-coquilles, disposées tête-bêche.

De façon classique, cette demi-coquille comprend un plateau inférieur horizontal 10, de forme substantiellement rectangulaire, muni de deux ailes latérales 11. L'ensemble a la forme d'un "U" aplati. Les ailes latérales 11 supportent des moyens de vissage permettant le couplage mécanique du connecteur Cₒ à un connecteur de type complémentaire (non représenté), de la manière qui sera détaillée ci-après. Ces moyens de vissage 12 comprennent une tige 120, filetée sur sa partie avant 121 et comprenant une molette de vissage 122 sur sa partie arrière. Cette disposition, en soi, est également classique.

De façon classique aussi, la demi-coquille 1 est muni de moyens de fixation 13 permettant de la solidariser avec la seconde demi-coquille (non représentée). Il peut s'agir, par exemple, d'entretoises munies de vis.

Selon un premier aspect de l'invention, la zone avant du plateau horizontal 10 est munie d'un ensemble d'ouvertures 14, préférentiellement de forme rectangulaire ou carrée. Ces ouvertures 14 sont alignées sur un axe longitudinal Δ₁, parallèle au bord avant du plateau support 10.

Selon un deuxième aspect de l'invention, le plateau horizontal 10 comporte, dans une zone centrale, deux nervures verticales, 15 et 16, s'étendant entre les deux ailes latérales 12, toutes deux parallèles à l'axe Δ₁ précité. Dans l'exemple de réalisation décrit, ces nervures sont disposées entre les ouvertures 14 et les entretoises 13. Elles ont toutes deux la forme d'une barrette substantiellement rectangulaire. Pour des raisons indiquées ci-après, elles sont munies sur leur bord supérieur de berceaux, 150 et 160, de forme hémisphérique.

Les ouvertures 14 et les nervures 15 et 16 vont permettre le montage, à l'intérieur de la demi-coquille 1 d'un ensemble d'éléments de connexion optique.

Les figures 2a à 2c illustrent la constitution et les phases de montage d'un élément de connexion optique conforme à l'invention.

La figure 2a illustre une fiche optique 3. Celle-ci comprend un manchon 30 entourant la terminaison T d'une fibre optique fₒ à coupler. Autour de ce manchon, on a disposé un ressort axial 31, fixé en une première extrémité, proche d'un ergot de positionnement angulaire 32 du manchon 30. A la seconde extrémité du manchon, on a disposé une butée annulaire 33.

Selon une première caractéristique importante de l'invention, un élément de connexion optique comprend, outre la fiche optique 3 proprement dite, qui vient d'être décrite, un corps de base 4. Celui-ci se présente sous la forme d'un "H" possédant deux parois verticales, par convention avant 40 et arrière 41. Chaque paroi est en outre munie d'un orifice central circulaire, 400 et 410, et d'une fente verticale, 401 et 411, respectivement. Cette disposition permet d'enfiler et de positionner le corps de base 4 "à cheval" sur le manchon 30 de la fiche optique 3. Le flanc antérieur du corps de base, c'est-à-dire la paroi 40 est positionnée entre l'extrémité libre du ressort axial 31 et la butée circulaire 33. Ce corps de base 4 conserve donc un degré de liberté permettant une translation le long d'un axe Δ parallèle à la direction de la fibre optique fₒ dans sa zone de terminaison T, lorsque l'on exerce une force de pression sur la fiche optique 3 suivant cette même direction. Si on relâche cette force, le ressort axial 31 rappelle automatiquement la fiche optique 3 en sa position de repos.

Selon une deuxième caractéristique importante, illustrée plus particulièrement par la figure 2b, l'élément de connexion optique comporte un élément de couplage optique 5 constitué par un module constitué d'un corps avant 50 substantiellement parallélépipèdique et d'un canon arrière cylindrique 51. Le corps avant 50 est muni de téton de positionnement, par exemple un crénelage, sur sa paroi supérieure : 500, et sur sa paroi inférieure : 501. Le canon arrière cylindrique 51 est muni d'un orifice central également cylindrique 510 se prolongeant dans le corps avant 50 de manière à le transpercer complètement et affleurer en face avant (voir figure 2c). Cette disposition permet d'enfiler l'élément de couplage 5 sur la terminaison T de la fibre optique fₒ et le manchon 30.

L'orifice central 510 est muni, au moins sur son arrière, d'une première rainure 511 dans laquelle vient s'enfiler l'ergot 32 dont est muni le manchon 30. Cette disposition permet un positionnement angulaire correct de la fiche optique 3 par rapport à l'élément de couplage optique 5 et, donc, également par rapport au plan support 10.

En face avant de l'élément de couplage optique 5, comme le montre plus particulièrement la figure 2c, il est prévu une seconde rainure 513, permettant le couplage optique avec une fiche complémentaire (non représentée), selon un positionnement angulaire mutuel prédéterminé. Enfin, de façon classique, pour faciliter l'insertion de cette fiche complémentaire, on dote la partie avant de l'orifice de couplage 510 d'une forme conique (en entonnoir) 512.

Selon une troisième caractéristique importante de l'invention, avant d'enfiler l'élément de couplage optique 5 sur la fibre optique fₒ, on dispose autour de cette même fibre optique fₒ et du manchon 30, un second ressort 6 qui exerce une force axiale (suivant l'axe Δ) de répulsion tendant à éloigner l'élément de Couplage optique 5 du corps de base 4.

L'ensemble des composants qui viennent d'être décrits forme ce qui va être appelé ci-après un élément de connexion optique individuel, référencé Elj.

En résumé, le montage d'un tel élément Elᵢ comprend les phases suivantes :
- figure 2a : montage du corps de base 4 en le positionnant sur le manchon 30 de la fiche optique 3, coincé entre la butée cylindrique 33 et le premier ressort axial 31 ;
- figure 2b : enfilement sur la fibre optique fo et le manchon 30 d'un second ressort axial 6 et d'un élément de couplage optique 5 ; la figure 2c illustrant la position finale atteinte par ces éléments lorsque le ressort 6 est compressé.

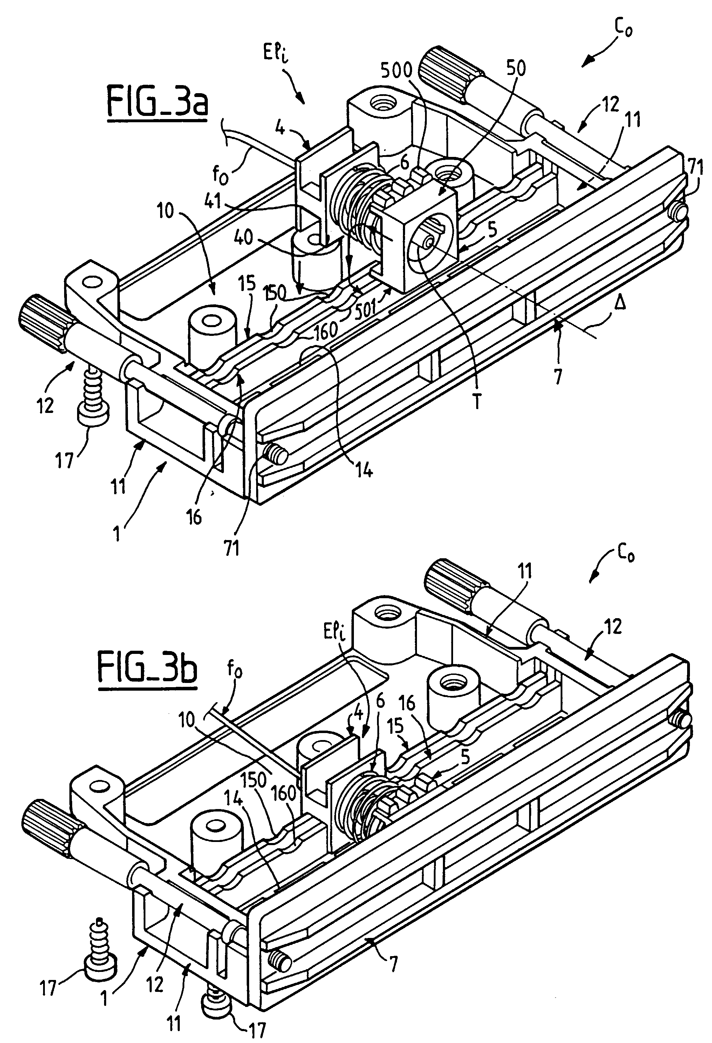

La figure 3a illustre le montage d'un des éléments de connexion optique Elᵢ précité dans la demi-coquille inférieure 1. Sur cette figure, pour ne pas surcharger le dessin, on n'a indiqué que les repères indispensables à la bonne compréhension de l'invention.

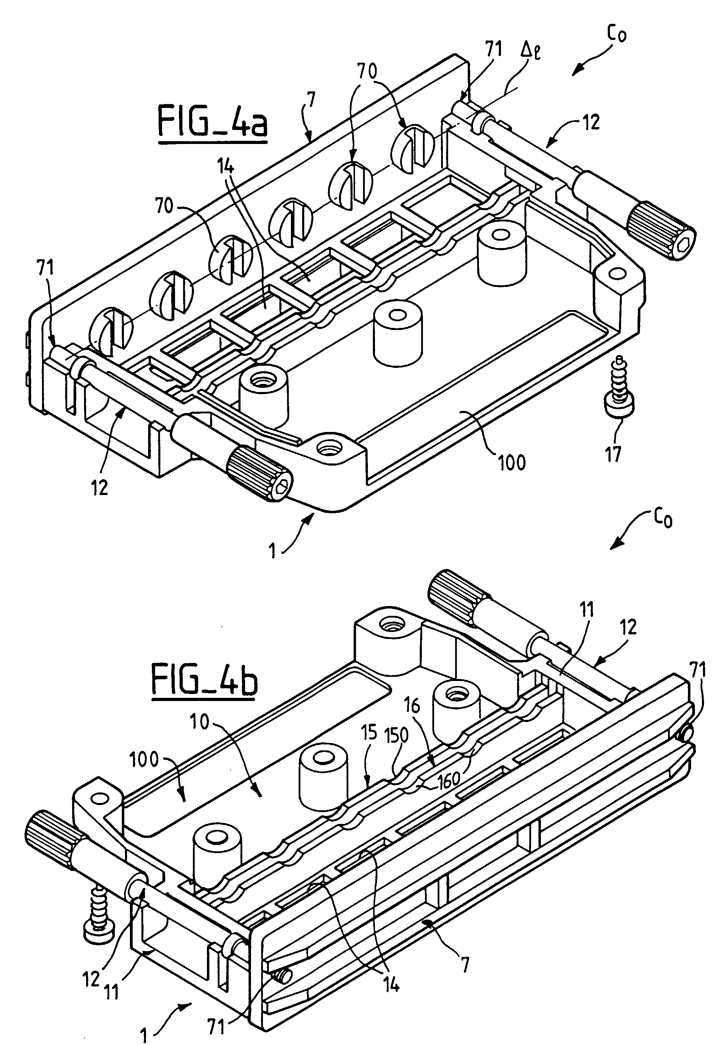

Cependant avant de procéder à cette opération, on munit la partie avant de la demi-coquille 1 d'un capot de protection 7. Celui-ci est muni de deux orifices latéraux 71 comportant un filetage complémentaire du filetage des moyens de couplages 12. Cette disposition permet d'utiliser ces moyens de couplage mécanique 12 pour fixer le capot de protection 7 sur la demi-coquille 1 et fermer ainsi la face avant du "U". Les figures 4a et 4b illustrent cet état, en vue de trois quarts arrière et de trois quarts avant, respectivement, l'arrière du connecteur Cₒ étant, par convention, le côté par lequel rentre le faisceau de fibres optiques fₒ (voir figures 3a ou 3b).

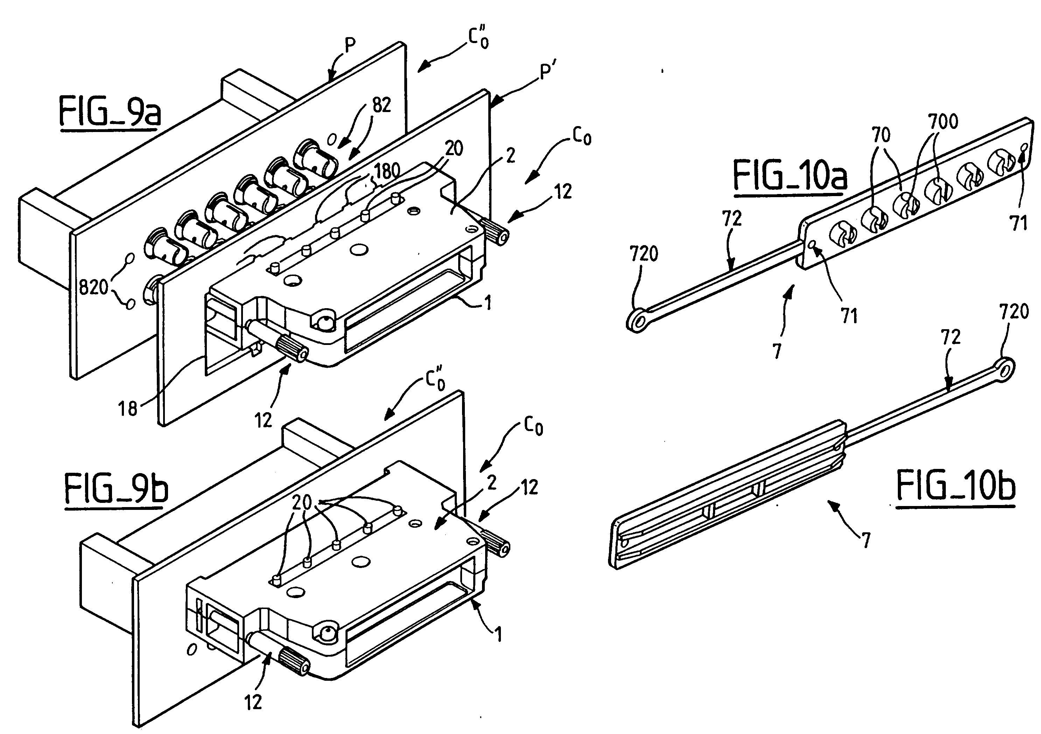

Selon une caractéristique supplémentaire de l'invention, la paroi arrière, ou interne, du capot 7, comme le montre plus particulièrement les figures 4a ou 10a, est muni de pions 70, en nombre égal au nombre d'ouvertures 14 et alignés suivant l'axe Δ₁ précité. Dans une variante préférée de l'invention, ces pions comportent des fentes verticales 700 dont le rôle est double, comme précisé ci-après.

Si on se reporte de nouveau à la figure 3a, l'élément de connexion optique Elᵢ, dans l'état atteint sur la figure 2c, c'est-à-dire le ressort 6 compressé, est inséré dans une des positions définies par, d'une part, les ouvertures 14, et, d'autre part, les berceaux arrondis 150 et 160. L'écartement intérieur entre les parois 40 et 41 du corps de base 4 en forme de "H" est tel que celui-ci peut-être posé à cheval (figure 3b) sur les nervures 15 et 16, les parois précitées étant disposées de part et d'autre de ces nervures. De ce fait, la partie du manchon 30 située entre Ces deux parois repose sur les berceaux hémicirculaires, 150 et 160, réalisés sur l'arête supérieure des nervures de maintien 15 et 16, respectivement. Il s'ensuit que l'ensemble "corps de base 4 - fiche optique 3" est bien calé sur son logement. Le seul degré de liberté subsistant, à ce niveau, est la possibilité de translation suivant une direction parallèle à l'axe Δ de la fibre optique fₒ.

L'autre extrémité de l'élément optique de connexion Elᵢ est munie, comme il a été décrit, d'un élément de couplage 5. Les crénelures 501 sont introduites dans l'orifice 14 situé en dessous du corps de base 4. On s'arrange pour que la largeur de l'orifice 14 soit légèrement supérieure à la longueur des crénelures 501, mais inférieure à la largeur du corps avant 50 de cet élément de couplage 5. De ce fait, compte tenu que les parois supérieure et inférieure de ce corps avant sont planes, le degré de liberté subsistant pour l'élément de couplage 5 est une possible translation suivant une direction parallèle à l'axe Δ de la fibre optique fₒ, dans la zone terminale T.

Lors de l'insertion de l'élément optique de connexion Elᵢ dans la demi-coquille 1, on exerce une force de compression sur le ressort 6, de manière à obtenir l'état illustré par la figure 2c. Lorsque l'on relâche la pression exercée sur le ressort 6, l'élément de couplage optique 5 s'enfile par l'orifice biseauté 510-512 sur le pion en vis à vis 70 (figure 4a) du capot de protection 7. Naturellement les diamètres respectifs du pion 70 et de l'orifice 510 sont tels qu'ils autorisent cette insertion. En outre, du fait de la présence de la fente centrale 700, la terminaison T de la fibre optique fₒ s'engage également librement à l'intérieur du pion 70. Il s'ensuit que ces pions 70 maintiennent provisoirement le corps de base 4 dans une position correcte.

La figure 3b illustre l'état pour lequel l'un des éléments de connexion optique Elᵢ conforme à l'invention est monté dans la demi-coquille inférieure 1 et maintenu provisoirement en cet état par le capot 7.

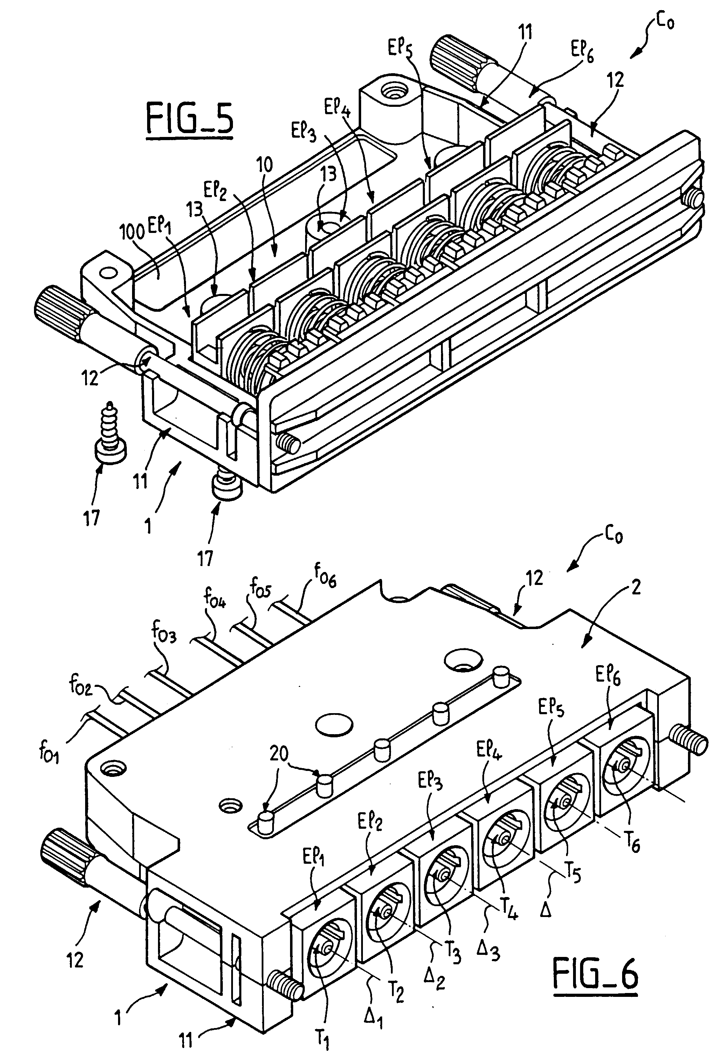

Lorsqu'on désire monter plusieurs éléments de connexion optique Elᵢ dans la demi-coquille 1, les opérations précédemment énumérées sont répétées pour chaque élément. Dans l'exemple illustré, la demi-coquille 1 est prévue pour accepter six éléments de connexion optique Elᵢ, soit les éléments El₁ à El₆, comme plus particulièrement illustré par la figure 5.

L'assemblage final consiste en la pose de la demi-coquille supérieure 2. La configuration intérieure de celle-ci (non représentée), du moins en ce qui concerne les nervures 15 et 16 ainsi que les ouvertures 14, est symétrique à celle de la demi-coquille inférieure.

La fixation de l'une sur l'autre pour former le boîtier définitif du connecteur Cₒ s'effectue de façon classique, par exemple à l'aide d'un jeu de vis périphériques 17 solidarisant les bords des demi-coquilles et des vis (non représentées) solidarisant les entretoises 13.

On peut alors retirer le capot de protection 7, car les éléments de connexion optique El₁ à El₆ sont emprisonnés dans leurs logements (ouverture 14) par l'intermédiaire des crénelures ou guides supérieurs 500 ou inférieurs 501.

La figure 6 illustre le connecteur Cₒ entièrement monté, les deux demi-coquilles 1 et 2 fixées l'une contre l'autre, sans le capot de protection 7. A cet égard, il doit être remarqué que la hauteur du capot est sensiblement égale à l'épaisseur cumulée des deux demi-coquilles 1 et 2.

Chaque élément de connexion optique, El₁ à El₆, présente deux niveau de liberté.

Le premier niveau de liberté se situe au niveau des terminaisons proprement dites, T₁ à T₆, des fibres optiques fₒ₁ à fₒ₆. En effet, comme il a été indiqué en regard des figures 2a et 2b, la fiche optique 3 est susceptible de mouvements de translation selon des directions parallèles aux axes de symétrie, Δ₁ à Δ₆, des fibres optiques, fₒ₁ à fₒ₆, plus précisément des terminaisons T₁ à T₆ de celles-ci.

Le second niveau de liberté se situe au niveau de l'élément de connexion optique, El₁ à El₆, proprement dit. En effet, si on se reporte de nouveau aux figures 3a et 3b, il a été indiqué que le corps de base 4, en forme de "H" étant bloqué par les nervures 15 et 16 sur lesquelles il est "à cheval", seul l'élément de couplage 5 de chaque élément de connexion Eᵢ est susceptible de mouvement de translation suivant les axes précités. Il est alors guidé par les parois latérales des ouvertures 14.

Pour autant, le positionnement angulaire est correctement assuré, quelle que soit la position d'un élément de connexion optique, El₁ à El₆, le long des axes Δ₁ à A₆. En effet, les manchons 30 (figure 2b) des fiches optiques 3 ont été introduits dans des rainures de guidage 511 pratiquées dans le canon cylindrique 51 de l'élément de couplage 5. Ces rainures définissent des positions angulaires précises de chaque fiche optique 3 par rapport à l'élément de couplage 5, donc aussi par rapport au boîtier du connecteur Cₒ, car la forme rectangulaire ou carrée du corps avant 50 de l'élément de couplage 5 interdit toute rotation autour de l'axe Δ.

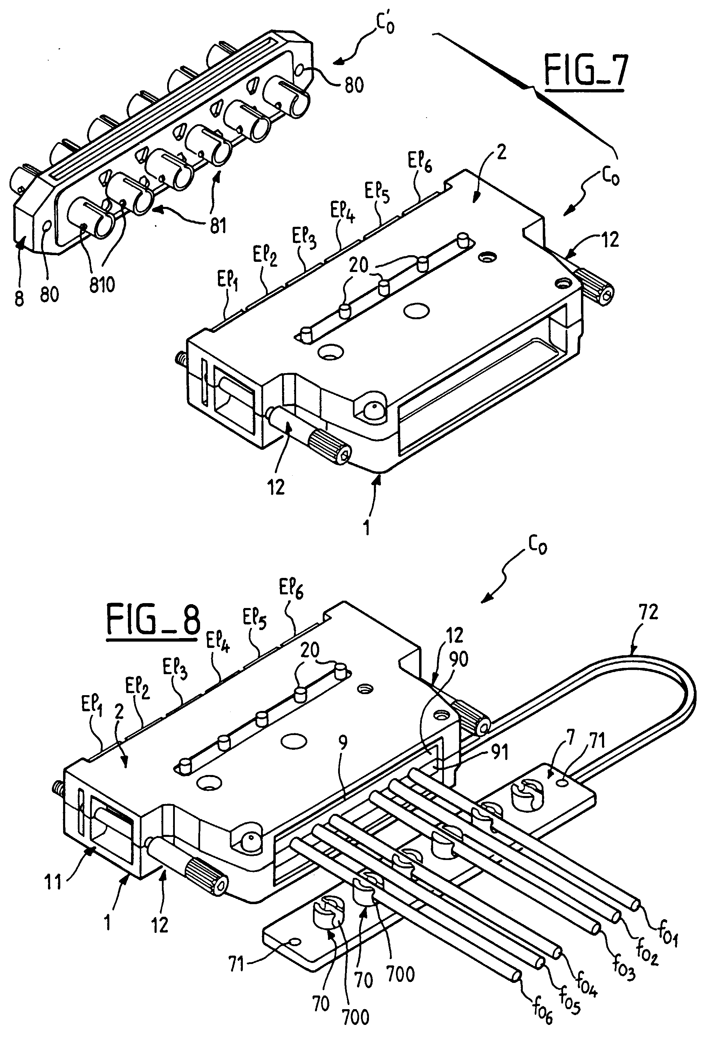

Le connecteur Cₒ ainsi constitué peut maintenant être accouplé à un connecteur de type complémentaire. A titre d'exemple non limitatif, la figure 7 illustre un tel accouplement. Pour ne pas surcharger le dessin, le faisceau de fibres optiques fₒ₁ à fₒ₆ n'a pas été représenté. Dans l'exemple illustré, le connecteur complémentaire C'ₒ de type classique est constitué par une embase 8 munie de six fiches 81, complémentaires des éléments de connexion El₁ à El₆. Le couplage optique précis et avec un minimum de pertes d'énergie, donc un bon rendement, va être favorisé par le double degré de liberté précité.

Pour obtenir un positionnement angulaire également précis, les fiches 81 sont munies d'ergots 810 s'insérant dans les rainures 513 (figure 2c).

Enfin, l'insertion, comme il a été signalé, est facilitée par le biseau 512 (figure 2c) pratiqué en entrée de l'embouchure 510.

La figure 8 illustre un mode de réalisation préféré d'un connecteur selon l'invention.

Conformément à ce mode de réalisation, on prévoit deux dispositions supplémentaires.

La première disposition consiste à prévoir un matériau mou ou élastique 9 disposé, en face arrière, entre les deux demi-coquilles 1 et 2. Celui-ci enserre le faisceau de fibres optiques fₒ₁ à fₒ₆, sortant du connecteur Cₒ. Cette disposition protège le faisceau précité des vibrations en absorbant les chocs.

Pour ce faire, il suffit de prévoir une ouverture 10 (voir figure 1 par exemple) de dimensions appropriées dans une zone arrière du support horizontal 10, ce dans chaque demi-coquille. On peut alors positionner un bloc de matériau du type précité et de forme sensiblement parallélépipèdique, par l'intermédiaire d'un profil en sur-épaisseur (non représenté), pratiqué sur une des faces, dans chacune des ouvertures 10. L'épaisseur de chaque bloc est choisie sensiblement égale à la hauteur des demi-coquilles, voire légèrement supérieure de manière à exercer une force de maintien sur les fibres optiques fₒ₁ à fₒ₆, par effet élastique dû à l'écrasement.

La seconde disposition consiste à utiliser le capot de protection 7 comme organe de guidage et de maintien du faisceau de fibres optiques fₒ₁ à fₒ₆, sortant du connecteur Cₒ.

Pour ce faire, le capot 7 est muni avantageusement d'une languette flexible 72, par exemple une languette latérale. Celle-ci, à son tour, est munie d'un orifice 720 en son extrémité libre. Par cette disposition, le capot de protection peut être solidarisé, de façon souple, au boîtier du connecteur Cₒ, ce qui évite de le perdre. Les figures 10a et 10 b illustre ce mode de réalisation du capot, respectivement en vue arrière et avant.

Le capot de protection 7, une fois dévissé de la demi-coquille inférieure 1, est disposé sous le faisceau de fibres optiques fₒ₁ à fₒ₆, sortant du connecteur Cₒ. Les pions 70, utilisés pour le maintien provisoire des éléments de connexion ELᵢ, à l'intérieur de la demi-coquille inférieure 1 (voir figure 3b), lors des phases de montage du connecteur Cₒ, peuvent alors jouer une seconde fonction, à savoir une fonction de guidage et de maintien du faisceau de fibres optiques fₒ₁ à ^{f}o6^{.}

Plus précisément, le capot de protection 7 est disposé à plat, pions 70 tournés vers le haut (dans l'exemple illustré), parallèlement à la rangée d'éléments de connexion optique, El₁ à El₆, un peu en arrière du boîtier du connecteur Cₒ. On peut alors utiliser tout ou partie des pions 70 en glissant les fibres optiques dans les fentes 700, selon la configuration du faisceau sortant, notamment l'espacement entre fibres optiques fₒ₁ à fₒ₆. Les fibres optiques restantes sont disposées entre deux pions adjacents.

Dans l'exemple illustré sur la figure 8, les fibres optiques fo₁, fo₃, fo₄ et fo₆ sont insérées dans une des fentes 700, les fibres fo₂ et fo₅ étant disposées entre deux pions 70.

Les connecteurs Cₒ conformes à l'invention sont susceptibles d'être accouplés à de nombreux types de connecteurs de type complémentaires. Un exemple a été brièvement décrit en regard de la figure 7.

Naturellement, ils peuvent être également accouplés à des embases disposées en une ou plusieurs rangées parallèles sur un panneau.

La figure 9a illustre cette possibilité. Le faisceau de fibres optiques fₒ₁ à fₒ₆ n'a pas été représenté, pour simplifier le dessin.

Le connecteur C"ₒ est constitué par un panneau P comportant deux rangées parallèles de six embases 82 complémentaires des six éléments de connexion optique El₁ à El₆ (voir figure 8, par exemple). On utilise alors deux connecteurs Cₒ superposés, dont un seul a été représenté.

Une seconde paroi P', parallèle à la première peut être prévue. Celle-ci est comporte une ouverture 18 de dimensions appropriées pour laisser le libre passage à deux connecteurs Cₒ, conformes à l'invention. Les connecteurs Cₒ peuvent être munis de pions de guidage et/ou de détrompage 20. Dans ce cas, l'orifice 18 comporte des rainures complémentaires 180.

La fixation mécanique de chaque connecteur Cₒ sur le connecteur C"ₒ est assurée de façon classique à l'aide des moyens de fixation 12. On prévoit dans le panneau P des orifices filetés 820 appariés au filetage 121 (figure 1) des moyens de fixation 12.

La figure 9b illustre l'état accouplé d'un connecteur Cₒ sur un connecteur C"ₒ. Pour simplifier le dessin, on n'a pas représenté le panneau P'.

Les éléments couplés aux fibres optiques fₒ₁ à fₒ₆ du connecteur Cₒ peuvent être de différents types : éléments optoélectroniques actifs (diode électroluminescente, photodiode, diode laser semi-conductrice, etc.) ou optiques passifs (lentille optique, fibre optique fo optique, etc.). Deux connecteurs conforme à l'invention, de même type, peuvent être également accouplés l'un à l'autre, à l'aide d'un connecteur intermédiaire, comme le suggère la figure 7 (connecteur C'ₒ).

A la lecture de ce qui précède, on constate aisément que l'invention atteint bien les buts qu'elle s'est fixés.

Elle permet tout à la fois un positionnement précis, tout en conservant, pour chaque élément de connexion optique, plusieurs degrés de liberté en translation ce qui autorise un couplage optique maximal et, par là, un bon rendement énergétique.

Le montage, voire le démontage, des éléments de connexion optique précités est particulièrement simple.

Il doit être clair cependant que l'invention n'est pas limitée aux seuls exemples de réalisations précisément décrits, notamment en relation avec les figures 1 à 10b.

Les connecteurs selon l'invention ne sont, notamment pas limités à un nombre précis d'éléments de connexion optique. Ce nombre d'éléments dépend essentiellement de considérations pratiques, technologiques voire de normes à respecter.

Les matériaux utilisables sont les matériaux couramment employés dans le domaine de la connectique optique pour la réalisation de connecteurs de l'art connu.

Enfin les ressorts utilisés pour la réalisation des éléments de connexion optiques peuvent être remplacés par tous moyens élastiques appropriés, sans sortir du cadre de l'invention.

## Revendications

1. Connecteur optique (Cₒ) comprenant un boîtier constitué de deux demi-coquilles (1, 2) destinées à recevoir au moins une fiche optique (3), terminaison (T) d'une fibre optique (fₒ) et présentant un axe de symétrie (Δ), le connecteur (Cₒ) étant destiné à être accouplé optiquement à un connecteur optique complémentaire (C'ₒ), caractérisé en ce que ladite terminaison (T) de fibre optique (fₒ) est entourée d'un manchon (30) comprenant, en une première extrémité, une butée (33) et des premiers moyens élastiques (31), solidaires du manchon (30) en une seconde extrémité proche de l'extrémité libre de la terminaison (T), en ce qu'un premier moyen (4), dit corps de base, est enfilé sur ce manchon (30) et disposé entre la butée (33) et les premiers moyens élastiques (31), ces premiers moyens élastiques (31) maintenant la fiche optique (3) en butée avancée sur le corps de base (4), de manière à autoriser un mouvement de translation de la terminaison (T) le long de l'axe de symétrie (Δ), en ce qu'un second moyen (5), dit élément de couplage optique, est enfilé sur ladite terminaison (T) de fibre optique (fₒ) par ladite extrémité libre, cet élément de couplage optique (5) étant agencé de telle sorte qu'il possède un mouvement de translation le long de l'axe de symétrie (Δ), en ce que des seconds moyens élastiques (6) sont disposés entre le corps de base (4) et l'élément de couplage optique (5), de manière à exercer une force de répulsion sur l'élément de couplage optique (5) suivant une direction parallèle à l'axe de symétrie (Δ), et en ce que l'intérieur de chacune desdites demi-coquilles (1, 2) comprend des moyens de verrouillage (15, 16) pour chacun desdits corps de base (4) dans une position déterminée et une ouverture (14) formant logement pour chacun desdits éléments de couplage optique (5).

2. Connecteur selon la revendication 1, caractérisé en ce que le corps de base (4) est constitué par une structure en forme de "H", dont les ailes forment deux parois verticales (40, 41), comportant un canal central horizontal (400, 410) le transperçant de part en part suivant une direction parallèle à l'axe de symétrie (Δ) et une rainure verticale (401, 410) dans chaque paroi, de manière à autoriser son enfilement sur ledit manchon, l'une des parois (40) étant disposée entre la butée (33) et les premiers moyens élastiques (31), et en ce que les moyens de verrouillage des corps de base (4) sont constitués d'une nervure longitudinale double (15, 16) formant berceau, en ce que chaque corps de base (4) est placé à cheval sur cette nervure longitudinale double (15, 16), les parois (40, 41) étant disposées de part et d'autre de celle-ci.

3. Connecteur selon la revendication 1, caractérisé en ce que l'élément de couplage (5) comprend un corps avant (50) parallélépipèdique rectangle, dont les parois supérieure et inférieure sont munies de reliefs en sur-épaisseur (500, 501) et d'un canon arrière cylindrique (51), en ce que l'élément de couplage optique (5) est doté d'un canal central (510), le transperçant de part en part, de manière à autoriser ledit enfilement sur la terminaison (T) de fibre optique (fo), suivant l'axe de symétrie (Δ), le corps avant (50) étant tourné vers l'extrémité libre de la terminaison (T), en ce que l'intérieur de chaque-demi coquille (1, 2) comprend un fond horizontal (10), à surface sensiblement plane, muni d'orifices rectangulaires (14) formant lesdits logements, en ce que les dimensions des reliefs (500, 501) sont déterminés de manière à permettre leur introduction dans les orifices rectangulaires (14) et à autoriser un mouvement de translation de l'élément de couplage le long de l'axe de symétrie (Δ).

4. Connecteur selon l'une quelconque des revendications 1 à 3, caractérisé en ce que le manchon (30) est muni d'un ergot de positionnement (32) et en ce que le canon (51) de l'élément de couplage optique (5) est muni, en face arrière, d'une rainure (511) complémentaire de l'ergot de positionnement (32), de manière à définir un positionnement angulaire relatif déterminé de l'élément de couplage optique (5) par rapport à la fiche optique (3).

5. Connecteur selon l'une quelconque des revendications précédentes, caractérisé en ce que le corps avant (50) est muni, en face avant, d'une rainure (513) destinée à définir un positionnement angulaire relatif déterminé de l'élément de couplage optique (5) par rapport à une fiche optique d'un connecteur optique complémentaire (C'ₒ, C"ₒ), pour réaliser ledit accouplement optique, et en ce que l'embouchure du canal central (510), en face avant du corps avant (50), est doté d'une forme biseautée (512), de manière à faciliter l'introduction d'une fiche optique d'un connecteur optique complémentaire (C'ₒ, C"ₒ).

6. Connecteur selon l'une quelconque des revendications précédentes, caractérisé en ce qu'il comprend en outre un capot de protection (7) amovible, recouvrant la face avant dudit boitier constitué des deux demi-coquilles (1, 2), ledit capot de protection (7) étant muni, sur sa face tournée vers l'intérieur des demi-coquilles (1, 2), des pions (70), chacun étant muni d'un orifice central borgne (700), et en ce que les terminaisons (T) sont introduites dans ces orifices centraux borgnes (700) lorsque le capot de protection (7) est fixé sur la face avant du boitier de connecteur (Cₒ).

7. Connecteur selon la revendication 6, caractérisé en ce que le capot (7) comprend en outre une languette élastique (72) solidarisée de façon amovible au boitier de connecteur (Cₒ), en ce que les orifices centraux borgnes (700) sont des rainures verticales, telles que, lorsque ledit capot de protection (7) est détaché du boîtier de connecteur (Cₒ) et disposé dans une zone arrière du connecteur (Cₒ), les fibres optiques (fo₁ à fo₆) sortant de la face arrière du connecteur (Cₒ) soient glissées, dans les canaux centraux borgnes (700), de manière à réaliser une fonction de maintien des fibres optiques (fₒ₁ à fₒ₆).

8. Connecteur selon l'une quelconque des revendications 1 à 7, caractérisé en ce que le plateau (10) de chaque demi-coquille (1, 2) est muni, sur une zone arrière, d'un orifice supplémentaire (100) et en ce qu'il est prévu deux blocs (90, 91) de matériau compressible (9), disposés en vis à vis, fermant l'arrière du boîtier de connecteur (Cₒ), et retenus, chacun, par l'un des orifices supplémentaires (100), de manière à enserrer les fibres optiques (fₒ₁ à fₒ₆) à la sortie du boîtier de connecteur (Cₒ).

9. Procédé de réalisation d'un connecteur optique selon l'une quelconque des revendications précédentes, caractérisé en ce qu'il comprend au moins les phases et étapes suivantes :
a/ une phase de réalisation d'au moins un élément de connexion optique (Elᵢ) comprenant les étapes suivantes :
- montage dudit corps de base (4) sur ladite fiche optique (3) par insertion entre ladite butée (33) et lesdits premiers moyens élastiques (31);
- insertion desdits seconds moyens élastiques (6) sur la fiche optique (3);
- et insertion dudit élément de couplage optique (5) sur la fiche optique (3);
b/ une phase de montage de chaque élément de connexion optique (Elᵢ) dans l'une des demi-coquilles (1) comprenant les étapes suivantes :
- compression desdits seconds moyens élastiques (6) de manière à rapprocher, par translation suivant ledit axe de symétrie (Δ), l'élément de couplage optique (5) du corps de base (4) ;
- insertion de l'élément de connexion optique (Elᵢ) en l'état compressé à l'intérieur de la demi-coquille (1);
- solidarisation du corps de base (4) auxdits moyens de verrouillage (15, 16);
- et insertion de l'élément de couplage optique (5) dans l'un desdits logement (14);
c/ et une phase d'assemblage des deux demi-coquilles (1, 2), l'une sur l'autre, tête-bêche, de manière à former un boîtier de connecteur (Cₒ).

10. Procédé selon les revendications 6 et 9, caractérisé en ce qu'il comprend une étape préliminaire de montage dudit capot de protection (7) sur la face avant du boîtier de connecteur (Cₒ) et en ce que, lors de ladite étape d'insertion de l'élément de connexion optique (Elᵢ) en l'état compressé à l'intérieur de la demi-coquille (1), ladite terminaison de fibre optique (fo) est introduite dans l'un desdits orifices centraux borgnes (700) des pions (70), de manière à assurer un maintien provisoire avant ladite phase d'assemblage des deux demi-coquilles (1, 2).
